(19) Europäisches Patentamt / European Patent Office / Office européen des brevets

(11) **EP 2 656 473 B1**

(12) **FASCICULE DE BREVET EUROPEEN**

(45) Date de publication et mention de la délivrance du brevet:
**13.05.2015 Bulletin 2015/20**

(21) Numéro de dépôt: **11799174.5**

(22) Date de dépôt: **20.12.2011**

(51) Int Cl.:
*H02J 7/00* $^{(2006.01)}$        *H01M 10/44* $^{(2006.01)}$

(86) Numéro de dépôt international:
**PCT/EP2011/073334**

(87) Numéro de publication internationale:
**WO 2012/084894 (28.06.2012 Gazette 2012/26)**

(54) **CONVERTISSEUR D'EQUILIBRAGE DES CELLULES D'UNE BATTERIE ELECTRIQUE**

LADEZUSTANDSAUSGLEICHSKONVERTER FÜR ELEKTRISCHE BATTERIEZELLEN

ELECTRIC BATTERY CELLS EQUALIZING CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010  FR 1061020**

(43) Date de publication de la demande:
**30.10.2013  Bulletin 2013/44**

(73) Titulaire: **IFP Energies nouvelles**
**92852 Rueil-Malmaison Cedex (FR)**

(72) Inventeurs:
- **TOUZANI, Youssef**
  **92310 Sèvres (FR)**
- **ALMANZA, Morgan**
  **34730 Prades-le-Lez (FR)**

(74) Mandataire: **Ilgart, Jean-Christophe et al**
**BREVALEX**
**95, rue d'Amsterdam**
**75378 Paris Cedex 8 (FR)**

(56) Documents cités:
**WO-A1-2010/108758     US-A- 5 262 711**
**US-A- 5 982 143**

EP 2 656 473 B1

**Description**

**DOMAINE TECHNIQUE**

L'invention se rapporte à un convertisseur d'équilibrage des cellules d'une batterie électrique, en particulier pour batteries de véhicules automobiles hybrides et électriques.

**ÉTAT DE LA TECHNIQUE ANTÉRIEURE**

La dynamique d'utilisation des batteries dans les véhicules automobiles hybrides et électriques engendre des cycles de charge et de décharge sévères.

Cette dynamique d'utilisation des batteries accélère la dispersion des caractéristiques des différentes cellules constituant la batterie, en particulier le rendement faradique provoquant, au cours de la vie de la batterie, des déséquilibres de charge. Le déséquilibre est d'autant plus contraignant dans le cas des batteries au Li-ion. En effet, les cellules doivent impérativement rester dans une plage de fonctionnement bien définie.

Afin de maintenir la capacité de la batterie tout en prolongeant sa durée de vie et son utilisation en toute sécurité, l'équilibrage des différentes cellules constituant la batterie s'avère indispensable. L'équilibrage consiste à transférer des charges entre les cellules afin qu'elles aient toutes le même état de charge.

Une batterie Li-ion est composée d'un ensemble de cellules de faible tension (de l'ordre de 3,6 V). Pour atteindre une tension plus élevée (de l'ordre de 200 V à 300 V) toutes les cellules sont assemblées en série. Dès qu'une cellule sort de sa plage de fonctionnement, c'est toute la batterie qui en pâtit. Pour maintenir les meilleures performances de la batterie, le système d'équilibrage doit intervenir au niveau de chaque cellule. Or la diminution de la tension est un facteur défavorable à la conversion d'énergie.

Dans la littérature, plusieurs solutions sont proposées pour assurer l'équilibrage des cellules de batterie. Ces solutions peuvent être classées en deux familles : dissipatives et non dissipatives. Dans la première famille, la mise en oeuvre de la solution est simple, mais l'énergie est purement dissipée. Quant à la seconde famille, les solutions non dissipatives peuvent être classées en trois catégories :

    o Un unique convertisseur commuté sur les cellules : il consiste à aiguiller la sortie d'un convertisseur isolé sur la cellule désirée, à l'aide d'une matrice d'interrupteurs, en général couteuse et complexe.

    o Des convertisseurs en série : le principe consiste à placer un convertisseur entre deux cellules successives. Généralement, ces structures comportent un nombre important de composants et ne permettent que des transferts entre cellules successives. En revanche, elles sont plus faciles à commander.

    o Des convertisseurs en parallèle : ils permettent de coupler directement toutes les cellules entre elles via une isolation galvanique. De façon générale, ces structures sont plus complexes à commander. Car, un même convertisseur pilote plusieurs cellules et nécessite l'utilisation d'un transformateur d'isolement.

Les convertisseurs en parallèle permettent des transferts de charges plus souples que les structures séries. Les transferts sont mieux adaptés donc moins nombreux. Leur inconvénient majeur est qu'ils nécessitent un transformateur dont le poids est pénalisant pour des solutions embarquées. La solution est d'augmenter la fréquence de découpage. Mais, cette augmentation associée à la faible tension des éléments accroît considérablement les pertes par commutation et conduction ainsi que les perturbations électromagnétiques.

Le document US 5 982 143 divulgue un convertisseur d'équilibrage de cellules d'une batterie électrique comprenant un circuit quasi-résonant, un transformateur couplant le circuit quasi-résonant à un circuit de pseudo-commande doté de diodes.

**EXPOSÉ DE L'INVENTION**

Pour remédier aux inconvénients des systèmes actuels, il est proposé une solution basée sur un convertisseur parallèle. Afin d'atteindre un meilleur rendement, la solution proposée met à profit des techniques de commutation douce au travers de quasi-résonances et des techniques minimisant les passages par des éléments semi-conducteurs passifs du type diode. En effet, la chute de tension dans ces éléments (environ 0,3 V pour des diodes Schottky) représente environ 10 % de la tension de la cellule. De plus, le nombre important de cellules peut rendre les commandes des transistors pour le pilotage des transferts périlleuses, complexes et coûteuses.

L'invention a pour objet un convertisseur d'équilibrage de cellules d'une batterie électrique, la batterie comprenant un nombre pair N de cellules branchées en série, le convertisseur comprenant:

- un premier circuit appelé circuit quasi-résonant,

- un deuxième circuit, appelé circuit de pseudo-commande,
- un transformateur couplant le circuit quasi-résonant au circuit de pseudo-commande et comprenant un bobinage primaire et N/2 bobinages secondaires, le bobinage primaire ayant une première extrémité connectée à une première borne du circuit quasi-résonant et une deuxième extrémité connectée à une deuxième borne du circuit quasi-résonant;

le circuit quasi-résonant comprend une inductance reliant ladite première borne à un point milieu d'une première branche comprenant un premier élément formant interrupteur et un deuxième élément formant interrupteur, ladite deuxième borne étant reliée au point milieu d'une deuxième branche comprenant un premier condensateur et un deuxième condensateur, la première extrémité de la première branche étant reliée à la première extrémité de la deuxième branche par un premier conducteur électrique, la deuxième extrémité de la première branche étant reliée à la deuxième extrémité de la deuxième branche par un deuxième conducteur électrique, les conducteurs électriques alimentant le circuit quasi-résonant par une tension continue ;
les éléments formant interrupteurs du circuit quasi-résonant comprennent des entrées de réception de signaux envoyés par un circuit d'attaque du circuit quasi-résonant pour fermer ou ouvrir les éléments formant interrupteur ;
caractérisé en ce que:

- le circuit de pseudo-commande comprend:

  o des modules de commutation qui comprennent des entrées de réception de signaux envoyés par un circuit d'attaque du circuit de pseudo-commande pour rendre passants ou bloqués les modules de commutation, chaque cellule de la batterie ayant un module de commutation branché en série avec elle, et
  o un même bobinage secondaire du transformateur refermant deux circuits électriques constitués chacun par un module de commutation et une cellule branchés en série,

- les signaux envoyés par le circuit d'attaque du circuit de pseudo-commande sont transférés aux entrées de réception des modules de commutation par des filtres passe-haut, chaque filtre passe-haut étant un filtre RC comprenant un condensateur et une résistance avec une diode placée en parallèle sur la résistance de façon à transmettre l'intégralité du signal de commande.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des figures annexées parmi lesquelles :

- la figure 1 est un schéma synoptique d'un système d'équilibrage des cellules d'une batterie Li-ion, selon l'invention,
- la figure 2 est un schéma électrique d'un exemple de système d'équilibrage des cellules d'une batterie Li-ion, selon l'invention,
- la figure 3 est un schéma électrique représentant le modèle équivalent du circuit quasi-résonant,
- la figure 4 est un ensemble de graphes disposés en concordance temporelle et montrant les formes d'ondes dans le circuit quasi-résonant en mode charge,
- la figure 5 est un graphe donnant une représentation comparée de la chute de tension dans un transistor MOSFET (à canal N) et dans sa diode intrinsèque,
- la figure 6 est un schéma équivalent partiel du circuit de pseudo-commande,
- la figure 7 représente les formes d'ondes dans le circuit de pseudo-commande dans le cas où l'on charge et décharge les cellules haute et basse et les formes d'ondes du circuit quasi-résonant en mode charge,
- la figure 8 représente un synoptique de la commande du convertisseur quasi-résonant à pseudo-commande, selon l'invention,
- la figure 9 est un schéma synoptique partiel du circuit d'attaque des modules de commutation (transistors MOSFET) du circuit de pseudo-commande.

## EXPOSÉ DÉTAILLÉ DE MODES DE RÉALISATION PARTICULIERS

Le système d'équilibrage selon la présente invention comprend deux parties couplées par un circuit magnétique (un transformateur).

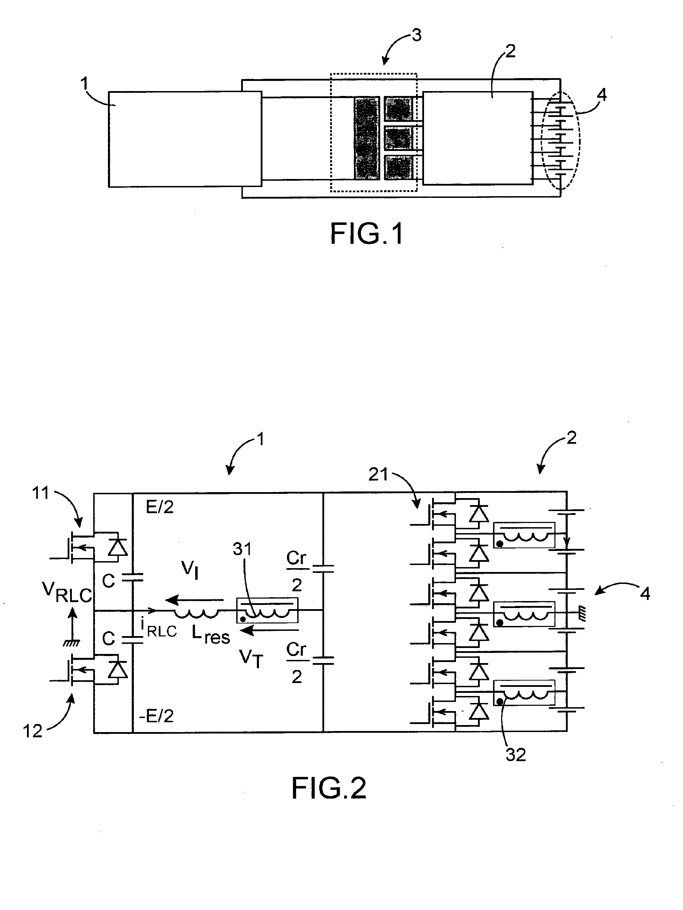

La figure 1 est un schéma synoptique d'un système d'équilibrage des cellules d'une batterie Li-ion, selon l'invention. Le système comprend un circuit quasi-résonant 1 constitué d'un demi-pont en H commutant à zéro de tension (ou ZVS pour « Zero-Voltage-Switching »). Ce circuit nécessite un dimensionnement judicieux des composants, afin de restreindre la plage fréquentielle utilisée, quel que soit le courant demandé. Le système comprend aussi un circuit 2 qualifié de « pseudo-commande » selon la présente invention. Le circuit 2 simplifie la commande et offre la possibilité de transférer un courant sur les cellules choisies avec des commutations à zéro de courant (ou ZCS pour « Zero-Current-Switching »). Les circuits 1 et 2 sont couplés par le transformateur 3.

D'un point de vue électrique, le circuit quasi-résonant 1 est directement alimenté par le module de batterie 4. Le transformateur à bobinage multiple 3 permet de coupler les deux circuits. Le circuit quasi-résonant, impose le courant, tandis que le circuit de pseudo-commande impose la tension sur le transformateur. Afin de réduire le nombre de bobinages, un courant positif recharge les cellules impaires et un courant négatif recharge les cellules paires. Le transformateur est utilisé de manière symétrique. Le circuit de pseudo-commande permet de favoriser la charge de la cellule sélectionnée.

La figure 2 est un schéma électrique d'un exemple de système d'équilibrage des cellules d'une batterie Li-ion, selon l'invention. La référence 1 désigne le circuit quasi-résonant, la référence 2 le cirucit de pseudo-commande et la référence 4 le module de batterie qui comprend six cellules. Le transformateur de couplage est représenté éclaté pour simplifier le schéma. Il comprend un bobinage primaire 31 et trois bobinages secondaires 32. Chaque bobinage secondaire 32 alimente deux cellules de la batterie. Par rapport à certaines solutions de l'art connu qui mettent en oeuvre un bobinage par cellule, le système d'équilibrage selon la présente invention présente l'avantage de réduire la quantité de cuivre dans le transformateur. Le circuit de pseudo-commande 2 comprend des interrupteurs 21 sur les bobinages secondaires 32 permettant ainsi le couplage d'un bobinage secondaire sur la cellule choisie. Il impose la tension sur le transformateur. Le demi-pont en H du circuit quasi-résonant est connecté sur l'ensemble des cellules. Son rôle est d'imposer le courant dans le transformateur de couplage.

Le circuit quasi-résonant

Dans l'exemple illustré par la figure 2, le circuit quasi-résonant 1 comprend :

- deux transistors MOSFET 11 (ou MOSFET haut) et 12 (ou MOSFET bas), jouant le rôle d'éléments formant interrupteurs, avec en parallèle sur chacun un condensateur C. Ces condensateurs peuvent être ceux intrinsèques à ces transistors. Ils peuvent aussi être des composants ajoutées ;
- deux condensateurs notés $C_r/2$ et permettant l'obtention d'un point milieu au niveau de la tension du module de batterie 4 ;
- une inductance $L_{res}$, placée en série avec le bobinage primaire 31, l'ensemble reliant le point milieu obtenu par les condensateurs $C_r/2$ au point milieu des transistors 11 et 12, l'inductance $L_{res}$ avec les condensateurs C permettant la commutation à zéro de tension (ZVS).

Le circuit quasi-résonant permet de contrôler le signe de la tension de la bobine $L_{res}$ tout en assurant des commutations à zéro de tension. On pilote le courant dans le primaire du transformateur alors que le circuit secondaire impose la tension du transformateur en fonction de l'état de pilotage des transistors MOSFET du circuit de pseudo-commande.

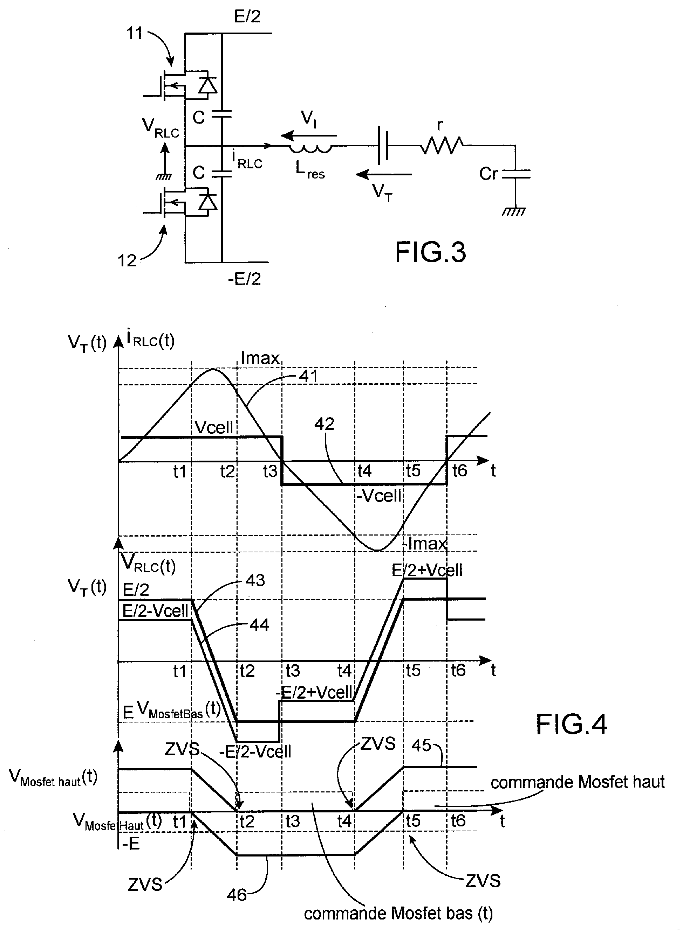

On peut montrer que le modèle équivalent du circuit quasi-résonnant correspond au circuit de la figure 3. En fusionnant les capacités notées $C_r/2$ et en plaçant la référence de tension au milieu du module batterie, on obtient une capacité équivalente $C_r$ et une tension de bus de E/2 à -E/2. En considérant que le transformateur est idéal et qu'il aiguille les courants positifs vers une cellule de numéro impair et les courants négatifs vers une cellule de numéro pair, on peut le remplacer par une source de tension variable que l'on note $V_T$ (tension aux bornes du bobinages primaire du transformateur). Cette tension est équivalente à la tension d'une cellule de la batterie multipliée par le signe du courant. Dans le mode charge, la tension équivalente est positive et elle est négative dans le mode décharge. La résistance du bobinage du transformateur est notée r. $V_l$ est la tension aux bornes de l'inductance $L_{res}$.

A partir du schéma équivalent de la figure 3, on retrouve une structure permettant la commutation à zéro de tension (ZVS) lorsque la fréquence d'excitation est supérieure à la fréquence de résonance.

La figure 4 est un ensemble de graphes disposés en concordance temporelle et montrant les formes d'ondes dans le circuit quasi-résonant.

Sur la figure 4, le graphe du haut représente deux caractéristiques : le courant $i_{RLC}$ en fonction du temps (voir aussi la figure 3), désigné par la référence 41, et la tension aux bornes du bobinage primaire du transformateur $V_T$ en fonction du temps, désignée par la référence 42. $V_T$ peut prendre les valeurs + ou $-V_{cell}$, $V_{cell}$ étant la tension aux bornes d'une cellule de la batterie.

Le graphe du milieu représente deux caractéristiques : la tension entre les transistors 11 et 12 et la masse ou $V_{RLC}$ (voir les figures 2 et 3), désignée par la référence 43, et la tension $V_l$ désignée par la référence 44.

Le graphe du bas représente les tensions aux bornes des transistors 11 et 12. La courbe 45 représente la tension aux bornes du transistor 12 ou MOSFET bas et la courbe 46 représente la tension aux bornes du transistor 11 ou MOSFET haut.

Pour déterminer judicieusement la valeur des composants, il faut résoudre le système d'équation (1).

$$\begin{cases} v_I = L_{res} \cdot \dfrac{di_{RLC}}{dt} \;\; ; \;\; i_{RLC} = C_r \cdot \dfrac{dv_c}{dt} \;\; ; \;\; v_r = r \cdot i_{RLC} \\ v_I + v_c + v_r + V_{cellsign(i_{RLC})} = v_{RLC} \end{cases} \qquad (1)$$

L'équation supplémentaire permettant la résolution du système (1) varie en fonction de l'état des transistors MOSFET. Le tableau 1 synthétise cette équation supplémentaire selon les différents états des transistors MOSFET (Haut et Bas) et les conditions de commutation. La tension "$V_f$" étant la tension résiduelle d'une diode à l'état passant.

Tableau 1

| t | $t_0 \rightarrow t_1$ | $t_1 \rightarrow t_2$ | $t_2 \rightarrow t_3$ | $t_3 \rightarrow t_4$ | $t_4 \rightarrow t_5$ | $t_4 \rightarrow t_5$ |
|---|---|---|---|---|---|---|
| équation supplémentaire | $V_{RLC}(t) = \dfrac{E}{2}$ | $i_{RLC} = 2.C.\dfrac{dV_{RLC}}{dt}$ | $V_{RLC}(t) = -\dfrac{E}{2}$ | | $i_{RLC} = 2.C.\dfrac{dV_{RLC}}{dt}$ | $V_{RLC}(t) = \dfrac{E}{2}$ |
| Etat Mosfet haut | fermé | ouvert | ouvert | | ouvert | fermé |
| Etat Mosfet bas | ouvert | ouvert | fermé | | ouvert | ouvert |
| | | ↑ | ↑ | | ↑ | ↑ |
| condition de commutation | $i_{RLC}(t)=I_{max}$ | $V_{RLC}(t) = -\dfrac{E}{2}+V_f$ | $i_{RLC}(t)=I_{min.}$ | | $i_{RLC}(t)=I_{min}$ | $V_{RLC}(t) = \dfrac{E}{2}-V_f$ |

EP 2 656 473 B1

Lorsque l'on impose la tension E/2 de l'instant $t_0$ à $t_1$, le courant croît. A l'instant $t_1$, lorsque le courant atteint Imax, on commande l'ouverture du Mosfet haut. Le condensateur C freine l'évolution de la tension et permet ainsi une commutation à zéro de tension. L'énergie stockée dans la bobine $L_{res}$ impose la continuité du courant qui par un transfert à la capacité C permet un abaissement progressif de la tension entre drain et source du Mosfet bas $V_{MosfetBas}$.

A l'instant $t_2$, lorsque la tension "$V_{MosfetBas}$" atteint approximativement -E/2, on commande la fermeture du Mosfet Bas.

De $t_2$ à $t_3$, le courant décroît tout en restant positif. Puis de $t_3$ à $t_4$, il décroît et devient négatif. Une fois que le courant est négatif, on peut reproduire la procédure dans le sens inverse.

Le circuit de pseudo-commande

Le circuit de pseudo-commande, pour un module de batterie comprenant N cellules, est constitué de :

- N/2 bobinages couplés sur le circuit magnétique (bobinages secondaires), N étant un nombre pair,
- N transistors MOSFET avec des diodes en antiparallèle.

Dans l'art connu, on trouve des systèmes d'équilibrage qui utilisent des solutions qui peuvent être réparties en deux groupes. Dans un premier groupe, la solution consiste en un système d'aiguillage de courant naturel, réalisé par l'intermédiaire des diodes dont les états sont induits par la tension des cellules. Dans ce cas, il n'y a pas de commande sur les transferts et le circuit doit comporter un niveau de symétrie important entre les différents secondaires. Dans un deuxième groupe, l'aiguillage du courant au niveau du secondaire est totalement contrôlé par l'intermédiaire d'interrupteurs entièrement commandables. Dans ce cas, la commande ne tolère aucun retard ou décalage.

La présente invention permet d'obtenir un juste milieu entre les deux solutions existantes. En offrant un chemin de plus faible résistance, elle favorise le courant vers la cellule désignée, d'où le nom de pseudo-commande. Matériellement, cette solution est mise en place par l'intermédiaire de transistors MOSFET. Ces composants ont l'avantage de présenter un chemin de courant, soit par la diode lorsqu'ils sont bloqués (la chute de tension est alors de $V_f$), soit par le canal de conduction lorsqu'ils sont commandés (la chute de tension est alors de $R_{dson}.I<<V_f$). C'est l'écart de tension entre ces deux niveaux qui permet d'avoir une commande sur le courant.

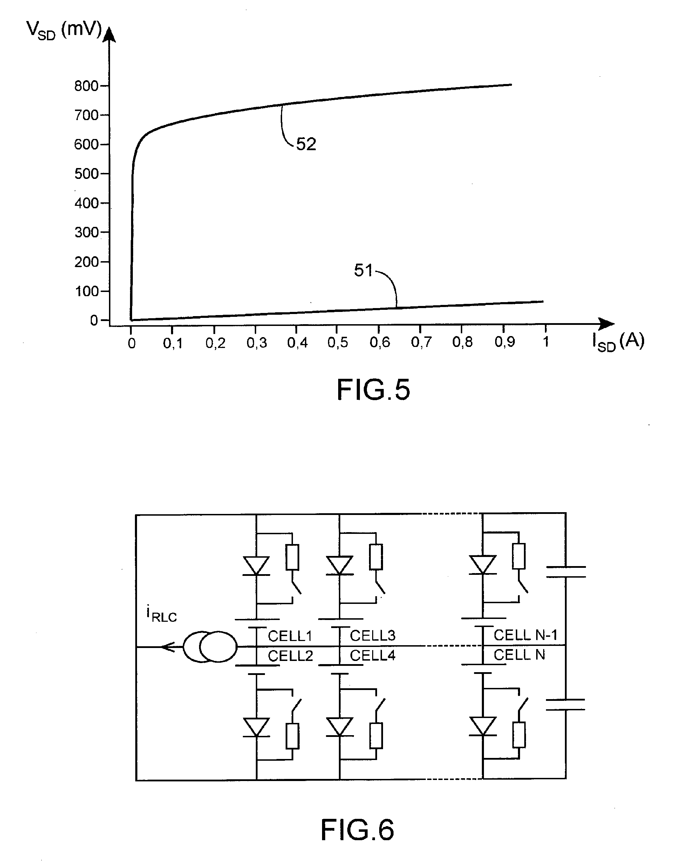

La figure 5 est un graphe donnant une représentation comparée de la chute de tension dans un transistor MOSFET (à canal N) et dans sa diode intrinsèque. La courbe 51 représente la tension $V_{SD}$ du transistor lors du passage du courant $I_{SD}$ par le canal N du transistor. La courbe 52 représente la tension $V_{SD}$ du transistor lors du passage du courant $I_{SD}$ par la diode. Dans le cas de la présente invention, la chute de tension engendrée par la diode est un élément très défavorable au rendement du convertisseur. En effet, une diode provoque une chute de tension de l'ordre de $V_f \approx$ 0,7V (diode silicium) ou $V_f \approx 0,3$V (diode Schottky). Cette chute de tension peut varier de 10 % à 30 % de la tension cellule. Par comparaison, dans le cas du transistor MOSFET (canal N) la chute de tension est de l'ordre 25 mV, soit moins de 1 % de la tension cellule.

La figure 6 est un schéma équivalent partiel du circuit de pseudo-commande. Si l'on prend le cas de la cellule numéro 1 "CELL1", lorsque le Mosfet Haut 1 est fermé pour $i_{RLC}$ positif, on remarque que la tension imposée sur le secondaire du transformateur devient $V_{cell1} + R_{dson}.I$. Cette tension étant plus faible que $V_{cell} + V_f$, cela provoque le blocage des diodes. Dans le cas d'un courant $i_{RLC}$ négatif, le principe est similaire mais avec un Mosfet Bas.

Par contre, dans le cas d'un retard, d'une omission de la commande ou d'un écart de tension inférieur à "$-V_f$" par rapport à la cellule choisie, le courant passera principalement dans la diode. Ainsi, grâce à cette commutation naturelle engendrée par les diodes, le système a l'aptitude d'éviter certains dysfonctionnements ou des écarts de tension trop importants.

Cette faculté de commande sur une plage de $V_f$ est adaptée à l'objectif de la présente invention de maintenir le même niveau de charge sur chaque cellule. En effet, cela se traduit par des tensions de cellules approximativement identiques.

En plus de piloter le courant dans la cellule désignée, cette technique réduit les pertes en diminuant la chute de tension dans les éléments semi-conducteurs.

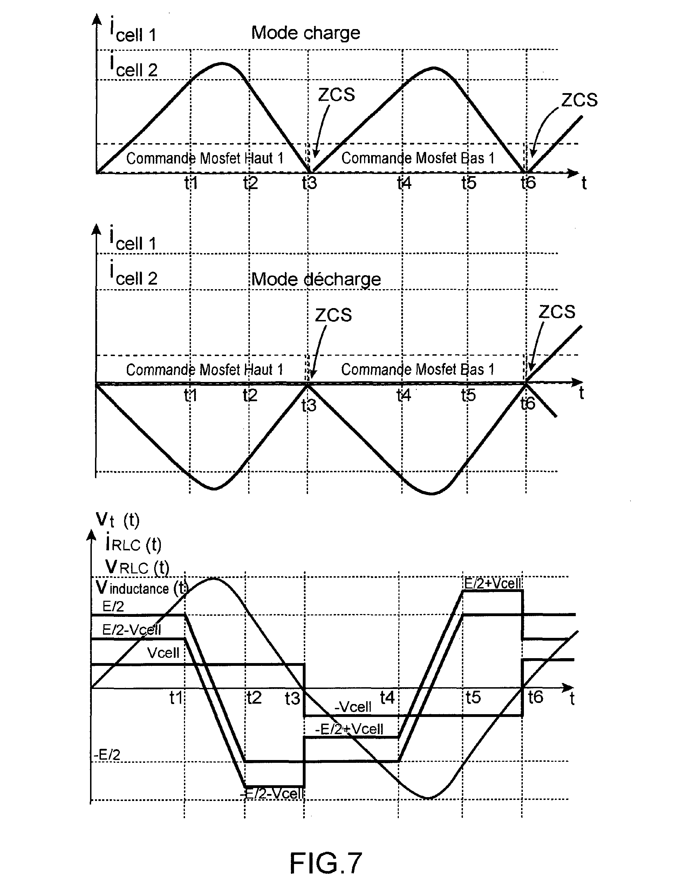

La figure 7 représente les formes d'ondes dans le circuit de pseudo-commande dans le cas où l'on charge et décharge les cellules haute et basse. A tout moment, un seul transistor est fermé dans le circuit de pseudo-commande.

Comme le montre la figure 7, les Mosfets sont commandés en fonction du signe du courant $I_{RLC}$ (alternance positive ou négative). La commutation se produit à chaque changement de signe. On obtient ainsi, une commutation douce à zéro de courant (ZVS). On peut voir par exemple que la fermeture du Mosfet Haut 1 lors de l'alternance positive permet la recharge de la cellule "CELL1". Par contre, sa fermeture durant l'alternance négative provoque la décharge de cette cellule. Ce principe s'applique à toutes les cellules de la même façon. Ainsi, la structure est capable de décharger ou charger des cellules. Par contre, ces modes de fonctionnement ne peuvent pas être alternés de manière quelconque. En effet, deux conditions principales doivent être respectées :

o Un flux dans le circuit magnétique inférieur au flux de saturation;
o Sélection d'une seule cellule à la fois.

La pseudo-commande ne fonctionne que lors de la charge car c'est le fonctionnement naturel de la structure. Lors de la décharge, on retrouve un mode de fonctionnement classique car la pseudo-commande devient une commande complète.

Les transistors MOSFET du circuit de pseudo-commande commutent à zéro de courant. Toutes les commutations du circuit sont douces. On peut ainsi augmenter la fréquence de résonance sans risquer une augmentation conséquente des pertes. La période des signaux se situe aux alentours de 2 μs à 5 μs, soit entre 200 kHz et 500 kHz. Le volume du circuit magnétique est de faible taille (quelques centimètres cubes) ce qui convient parfaitement à des applications embarquées.

<u>Commande du convertisseur quasi-résonant à pseudo-commande</u>

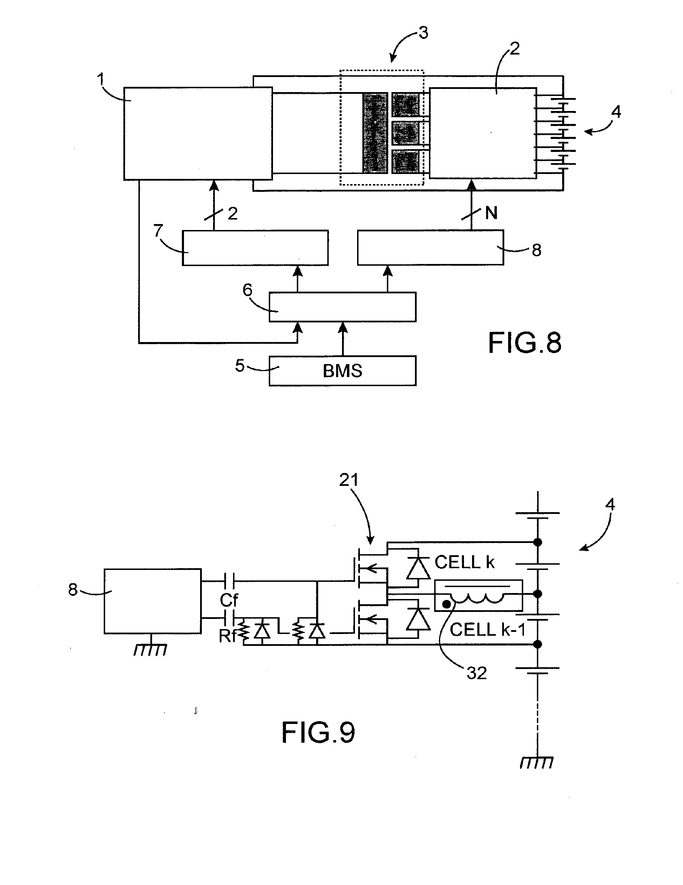

La figure 8 représente un synoptique de la commande du convertisseur quasi-résonant à pseudo-commande, selon l'invention

Sur la figure 8, on a repris les mêmes références qu'à la figure 1 pour désigner les différentes parties du convertisseur quasi-résonant à pseudo-comande, soit le circuit quasi-résonant 1, le circuit de pseudo-commande 2 et le transformateur 3. On reconnaît également le module de batterie 4 qui, dans cet exemple, est constitué de six cellules. La supervision de la structure d'équilibrage est effectuée par le calculateur 5 ou BMS (pour « Battery Management System »). Le circuit d'équilibrage du convertisseur reçoit du calculateur 5 les consignes suivantes : démarrage, arrêt, mode de fonctionnement charge ou décharge et cellules sélectionnées.

Sur la figure 8, la référence 7 désigne un circuit d'attaque des transistors MOSFET du circuit quasi-résonant 1, la référence 8 désigne un circuit d'attaque des transistors MOSFET du circuit de pseudo-commande 2. La référence 6 désigne une interface de contrôle recevant en entrées la sortie du calculateur 5 et un signal représentatif d'une mesure de courant et émis par le circuit quasi-résonant 1. L'interface de contrôle gère les circuits d'attaque 7 et 8.

Le circuit d'attaque 7 du circuit quasi-résonant peut être réalisé de façon classique. Le signal de contrôle peut être généré par des circuits spécialisés basés sur des techniques « Phase Shifted Resonant PWM ».

Le signal de commande des transistors MOSFET du circuit de pseudo-commande 2 peut être généré à partir d'un transformateur de courant.

Il est avantageux de mettre en place des circuits d'attaque pour les transistors MOSFET du circuit pseudo-commande qui soient simples, rapides, robustes et qui consomment peu. Sachant que l'on se heurte principalement à deux difficultés: les tensions aux niveau des sources des Mosfets sont différentes et les tensions des sources des « Mosfet$_k$ haut » du circuit de pseudo-commande sont variables. La problématique peut sembler difficile, car les solutions couramment utilisées en électronique de puissance ne sont pas bien appropriées à cette topologe. La solution mise en oeuvre profite de deux des degrés de liberté disponibles dans la topologie de cet exemple de réalisation de l'invention.

Comme les tensions de grille des « Mosfet$_k$ bas » du circuit de pseudo-commande sont fixes par rapport à la référence de potentiel, on utilise un pseudo filtrage passe-haut. Le signal de commande ayant une fréquence élevée, il est intégralement transféré par le filtre passe-haut (de type RC), alors que la composante continue due au décalage des potentiels n'est pas transmise. L'inconvénient du filtrage passe-haut est qu'il aura tendance à supprimer également la composante continue du signal de commande. Pour pouvoir transmettre l'intégralité du signal de commande, on place une diode en parallèle sur la résistance R$_f$. On obtient alors le circuit présenté à la figure 9.

Sur la figure 9, chaque filtre passe-haut est constitué d'un condensateur C$_f$ et d'une résistance R$_f$. La figure 9 montre la diode disposée en parallèle sur la résistance R$_f$.

Le deuxième degré de liberté est que contrairement aux structures classiques, les niveaux des tensions drain/source sont relativement faibles, généralement entre 0 V et 7 V. La tension de grille peut être supérieure à la tension entre drain et source. Une solution proposée par l'invention consiste à imposer une tension de grille supérieure à la tension Vds (entre drain et source) afin de pouvoir ramener la commande à la tension de source, du « Mosfets$_k$ bas », comme le présente la figure 9. Cette technique permet de commander tous les MOSFETS du circuit de pseudo-commande par rapport à une même référence de potentiel.

**Revendications**

**1.** Convertisseur d'équilibrage de cellules d'une batterie électrique (4), la batterie comprenant un nombre pair N de cellules branchées en série, le convertisseur comprenant :

- un premier circuit appelé circuit quasi-résonant (1),

- un deuxième circuit, appelé circuit de pseudo-commande (2),
- un transformateur (3) couplant le circuit quasi-résonant (1) au circuit de pseudo-commande (2) et comprenant un bobinage primaire (31) et N/2 bobinages secondaires (32), le bobinage primaire (31) ayant une première extrémité connectée à une première borne du circuit quasi-résonant et une deuxième extrémité connectée à une deuxième borne du circuit quasi-résonant;

le circuit quasi-résonant (1) comprend une inductance ($L_{res}$) reliant ladite première borne à un point milieu d'une première branche comprenant un premier élément formant interrupteur et un deuxième élément formant interrupteur, ladite deuxième borne étant reliée au point milieu d'une deuxième branche comprenant un premier condensateur et un deuxième condensateur, la première extrémité de la première branche étant reliée à la première extrémité de la deuxième branche par un premier conducteur électrique, la deuxième extrémité de la première branche étant reliée à la deuxième extrémité de la deuxième branche par un deuxième conducteur électrique, les conducteurs électriques alimentant le circuit quasi-résonant (1) par une tension continue ;
les éléments formant interrupteurs du circuit quasi-résonant comprennent des entrées de réception de signaux envoyés par un circuit d'attaque du circuit quasi-résonant pour fermer ou ouvrir les éléments formant interrupteur ;
**caractérisé en ce que** :

- le circuit de pseudo-commande (2) comprend :

o des modules de commutation qui comprennent des entrées de réception de signaux envoyés par un circuit d'attaque (8) du circuit de pseudo-commande pour rendre passants ou bloqués les modules de commutation, chaque cellule de la batterie ayant un module de commutation branché en série avec elle, et
o un même bobinage secondaire (32) du transformateur refermant deux circuits électriques constitués chacun par un module de commutation (21) et une cellule branchés en série,

- les signaux envoyés par le circuit d'attaque (8) du circuit de pseudo-commande (2) sont transférés aux entrées de réception des modules de commutation par des filtres passe-haut, chaque filtre passe-haut étant un filtre RC comprenant un condensateur ($C_f$) et une résistance ($R_f$) avec une diode placée en parallèle sur la résistance de façon à transmettre l'intégralité du signal de commande.

2. Convertisseur d'équilibrage selon la revendication 1, dans lequel les conducteurs électriques du circuit quasi-résonant sont connectés à la batterie électrique (4).

3. Convertisseur d'équilibrage selon l'une des revendications 1 ou 2, dans lequel les éléments formant interrupteurs du circuit quasi-résonant sont des transistors MOSFET (11, 12).

4. Convertisseur d'équilibrage selon la revendication 3, dans lequel un condensateur (C) est branché en parallèle sur chaque transistor MOSFET (11, 12).

5. Convertisseur d'équilibrage selon l'une quelconque des revendications 1 à 4, dans lequel les condensateurs de la deuxième branche du circuit quasi-résonant sont de même valeur.

6. Convertisseur d'équilibrage selon l'une quelconque des revendications 1 à 5, dans lequel les modules de commutation (21) du circuit de pseudo-commande (2) comprennent des transistors MOSFET avec des diodes montées en antiparallèle.

7. Convertisseur d'équilibrage selon la revendication 6, dans lequel les transistors MOSFET du circuit de pseudo-commande (2) fonctionnent avec une tension de grille supérieure à la tension entre le drain et la source.

**Patentansprüche**

1. Ausgleichswandler für Zellen einer elektrischen Batterie (4), wobei die Batterie eine gerade Anzahl N von in Reihe geschalteter Zellen aufweist, wobei der Wandler Folgendes umfasst:

- einen ersten Schaltkreis, den sogenannten quasi-resonanten Schaltkreis (1);
- einen zweiten Schaltkreis, den sogenannten Pseudobefehls-Schaltkeis (2);
- einen Transformator (3), welcher den quasi-resonanten Schaltkreis (1) mit dem Pseudobefehls-Schaltkreis (2) koppelt und eine Primärwicklung (31) sowie N/2 Sekundärwicklungen (32) aufweist, wobei die Primärwicklung (31) ein erstes Ende aufweist, welches mit einem ersten Anschluss des quasi-resonanten Schaltkreises verbunden ist, sowie ein zweites Ende aufweist, welche mit einem zweiten Anschluss des quasi-resonanten Schaltkreises verbunden ist;

wobei der quasi-resonante Schaltkreis (1) eine Induktivität ($L_{res}$) aufweist, welche den besagten ersten Anschluss mit einem Mittelpunkt eines ersten Zweigs verbindet, welcher ein einen Schalter bzw. Unterbrecher bildendes erstes Element sowie ein einen Schalter bzw. Unterbrecher bildendes zweites Element umfasst, wobei der besagte zweite Anschluss mit dem Mittelpunkt eines zweiten Zweigs, welcher einen ersten Kondensator und einen zweiten Kondensator aufweist, verbunden ist, wobei das erste Ende des ersten Zweigs mit dem ersten Ende des zweiten Zweigs durch einen ersten elektrischen Leiter verbunden ist, wobei das zweite Ende des ersten Zweigs mit dem zweiten Ende des zweiten Zweigs durch einen zweiten elektrischen Leiter verbunden ist, wobei die elektrischen Leiter den quasi-resonanten Schaltkreis (1) mit einer Gleichspannung versorgen;

wobei die die Unterbrecher bzw. Schalter des quasi-resonanten Schaltkreis bildenden Elemente Empfangseingänge für Signale umfassen, welche von einer Treiberschaltung des quasi-resonanten Schaltkreises gesendet werden, um die den Schalter bzw. Unterbrecher bildenden Elemente zu schließen oder zu öffnen;

**dadurch gekennzeichnet, dass**:

- der Pseudobefehls-Schaltkreis (2) Folgendes aufweist:

Ä Schaltmodule, welche die Empfangseingänge für die Signale umfassen, welche von einer Treiberschaltung (8) des Pseudobefehls-Schaltkreises gesendet werden, um einen leitenden oder sperrenden Zustand der Schaltmodule herzustellen, wobei jede Zelle der Batterie ein mit ihr in Reihe geschaltetes Schaltmodul aufweist, und

À eine selbige Sekundärwicklung (32) des Transformators, welche zwei elektrische Schaltkreise wieder schließt, welche jeweils durch ein Schaltmodul (21) und eine in Reihe geschaltete Zelle gebildet sind;

- die von der Treiberschaltung (8) des Pseudobefehls-Schaltkreises (2) gesendeten Signale an die Empfangseingänge der Schaltmodule durch Hochpassfilter weitergeleitet werden, wobei jedes Hochpassfilter ein RC-Filter ist, das einen Kondensator ($C_i$) und einen Widerstand ($R_f$) mit einer zum Widerstand parallel angeordneten Diode umfasst, damit das gesamte Steuersignal übertragen wird.

2. Ausgleichswandler nach Anspruch 1, in welchem die elektrischen Leiter des quasi-resonanten Schaltkreises mit der elektrischen Batterie (4) verbunden sind.

3. Ausgleichswandler nach einem der Ansprüche 1 oder 2, in welchem die die Schalter bzw. Unterbrecher des quasi-resonanten Schaltkreises bildenden Elemente MOSFET-Transistoren (11, 12) sind.

4. Ausgleichswandler nach Anspruch 3, in welchem ein Kondensator (C) zu jedem MOSFET-Transistor (11, 12) parallel geschaltet ist.

5. Ausgleichswandler nach einem der Ansprüche 1 bis 4, in welchem die Kondensatoren des zweiten Zweigs des quasi-resonanten Schaltkreises den selben Wert aufweisen.

6. Ausgleichswandler nach einem der Ansprüche 1 bis 5, in welchem die Schaltmodule (21) des Pseudobefehls-Schaltkreises (2) MOSFET-Transistoren mit Dioden umfassen, welche antiparallel geschaltet sind.

7. Ausgleichswandler nach Anspruch 6, in welchem die MOSFET-Transistoren des Pseudobefehls-Schaltkreises (2) mit einer Gate-Spannung arbeiten, welche höher ist als die Spannung zwischen dem Drain- und dem Sourceanschluss.

**Claims**

1. A cell balancing converter of an electric battery (4), where the battery includes an even number N of cells connected in series, the converter including:

- a first circuit called a quasi-resonant circuit (1),

- a second circuit, called a pseudo-control circuit (2),
- a transformer (3) coupling the quasi-resonant circuit (1) to the pseudo-control circuit (2), and including a primary winding (31) and N/2 secondary windings (32), where one end of the primary winding (31) is connected to a first terminal of the quasi-resonant circuit, and the other end is connected to a second terminal of the quasi-resonant circuit,

the quasi-resonant circuit (1) includes an inductor ($L_{res}$) connecting said first terminal to a middle-point of a first branch including a first element forming a switch and a second element forming a switch, where said second terminal is connected to the middle-point of a second branch including a first capacitor and a second capacitor, where the first end of the first branch is connected to the first end of the second branch by a first electrical conductor, where the second end of the first branch is connected to the second end of the second branch by a second electrical conductor, and where the electrical conductors power the quasi-resonant circuit (1) by a direct voltage;
the elements forming switches of the quasi-resonant circuit include inputs for receiving signals sent by a driving circuit of the quasi-resonant circuit to close or open the elements forming switches;
**characterized in that**:

- the pseudo-control circuit (2) include

o switching modules which include inputs for receiving signals sent by a driving circuit of the pseudo-control circuit to put the switching modules into an on-state or off-state, each cell of the battery having a switching module connected in series with it, and
o a given secondary winding (32) of the transformer closing two electrical circuits, each of which consists of a switching module (21) and a cell, connected in series;

- the signals sent by the driving circuit (8) of the pseudo-control circuit (2) are transferred to the reception inputs of the switching modules by high pass filters, where each high-pass filter is an RC filter including a capacitor ($C_f$) and a resistor ($R_f$) with a diode installed in parallel with the resistor such that the entire control signal is transmitted.

2. A balancing converter according to claim 1, in which the electrical conductors of the quasi-resonant circuit are connected to the electric battery (4).

3. A balancing converter according to either of claims 1 or 2, in which the elements forming the switches of the quasi-resonant circuit are MOSFET transistors (11, 12).

4. A balancing converter according to claim 3, in which a capacitor (C) is connected in parallel to each MOSFET transistor (11, 12).

5. A balancing converter according to any one of claims 1 to 4, in which the capacitors of the second branch of the quasi-resonant circuit are of the same value.

6. A balancing converter according to any one of claims 1 to 5, in which the switching modules (21) of the pseudo-control circuit (2) include MOSFET transistors with diodes installed in antiparallel.

7. A balancing converter according to claim 6, in which the MOSFET transistors of the pseudo-control circuit (2) operate with a grid voltage higher than the voltage between the drain and the source.

FIG.1

FIG.2

FIG.3

FIG.4

FIG.5

FIG.6

FIG.7

FIG.8

FIG.9

**EP 2 656 473 B1**

## RÉFÉRENCES CITÉES DANS LA DESCRIPTION

### Documents brevets cités dans la description

- US 5982143 A